# EUROPEAN PATENT SPECIFICATION

(11) **EP 1 906 234 B1**
(45) Date of publication and mention of the grant of the patent: **29.07.2009**
(21) Application number: 07110498.8
(22) Date of filing: 18.06.2007
(51) Int. Cl.: G03B 35/10

(54) **Adapter and three-dimensional image photograph apparatus having the same**
Adapter und Vorrichtung zur Fotografie dreidimensionaler Bilder damit
Adaptateur et appareil photographique à image tridimensionnelle l'incorporant

(30) Priority: 26.09.2006 KR 20060093457
(43) Date of publication of application: 02.04.2008
(73) Proprietor: Samsung Electronics Co., Ltd, Suwon-si, Gyeonggi-do 443-742 (KR)
(72) Inventor: Jin, Kyoung-shin, Gyeonggi-do (KR)
(74) Representative: Brandon, Paul Laurence

(56) References cited:
- EP-A- 0 830 034
- EP-A- 1 408 702
- DE-A1-9102004 025 68
- GB-A- 2 040 134
- JP-A- 62 273 526

## Description

Apparatus consistent with the present invention relate to three-dimensional image photography and to adaptors.

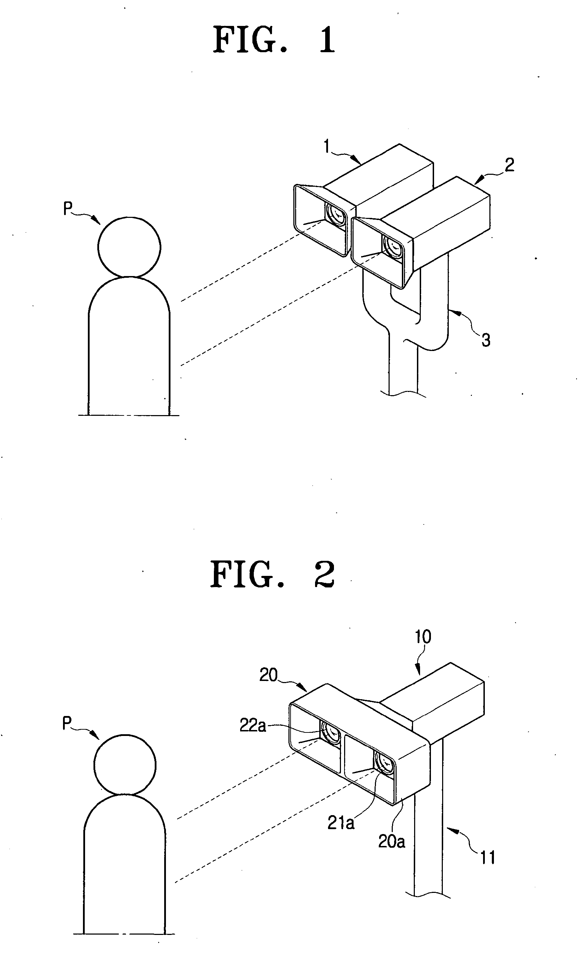

An example of a general three-dimensional image photography apparatus is illustrated in FIG. 1. As shown, the three-dimensional image photography apparatus utilizes two cameras 1, 2 which are mounted on a mount 3 side by side, to capture the images of an object P seen from the right and the left eyes. Accordingly, the right camera 1 stores the right eye image, while the left camera 2 stores the left eye image. The stored images of the cameras 1, 2 are then combined into a single image, which makes a viewer feel that he is seeing a three-dimensional image.

In related art, a three-dimensional image photography apparatus is not so economical because it requires two cameras 1, 2, and additional components associated with other processing such as combining of the captured images.

Additionally, because the images are separately taken through the two cameras 1, 2 and stored, there frequently occurs unbalance of brightness or luminosity, or minute difference between the two cameras 1, 2, when the images are combined by a single image source. Additional processing, such as editing, is also required to handle sequential synchronization of the image sources generated by the two cameras 1, 2, but there are technical difficulties. GB 2,040,134A discloses a stereoscopic television system that uses a switchable optical polariser to alternately form images corresponding to the left and right eyes on a television camera tube. A corresponding switchable polariser is used in combination with a television monitor to produce alternately images which are vertically or horizontally polarized. The switchable polarizer is a liquid crystal cell containing a thin layer of twisted nematic liquid crystal material.

Other examples of conventional stereoscopic systems are disclosed in EP-A-0 830 034 and JP-A-62 273 586.

Accordingly, preferred exemplary embodiments of the present invention aim to provide a three-dimensional image photography apparatus which utilizes one camera to provide a three-dimensional image.

The adaptor may further comprise an output lens which magnifies an image being transmitted by the DMD module and outputs the magnified image to the image photography unit.

The output lens may be arranged behind the DMD module.

The adaptor may further comprise a controller which controls the rotation of the minute driving mirrors.

The adaptor may be removably mounted to a front side of the image photography unit.

The adaptor may be integrally formed on a front side of the image photography unit.

Various aspects of the invention will become apparent to those skilled in the art from the following detailed description, which, taken in conjunction with the annexed drawings, discloses exemplary embodiments of the invention.

The above present invention will be more apparent from the following description, by way of example only taken in conjunction with the accompanying drawings, in which:
FIG. 1 is a perspective view of a related art three-dimensional image photography apparatus;
FIG. 2 is a perspective view of a three-dimensional image photography apparatus according to an exemplary embodiment of the present invention; and
FIGS. 3A and 3B illustrate the adapter of FIG. 2.

Throughout the drawings, the same drawing reference numerals will be understood to refer to the same elements, features, and structures.

The matters defined in the description such as a detailed construction and elements are provided to assist in understanding of exemplary embodiments of the invention. Accordingly, those of ordinary skill in the art will recognize that various changes and modifications of the exemplary embodiments described herein can be made without departing from the scope of the invention as defined by the claims. Also, descriptions of well-known functions and constructions are omitted for clarity and conciseness.

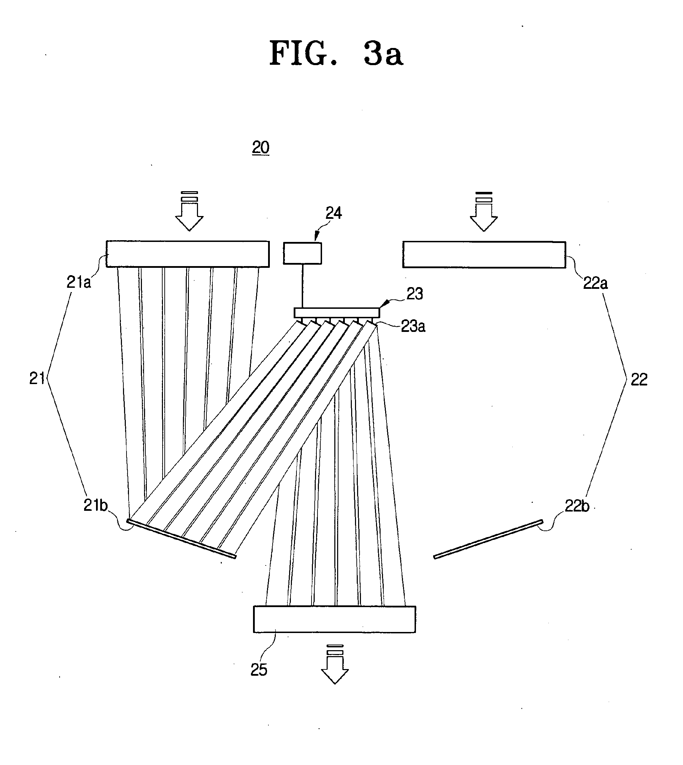

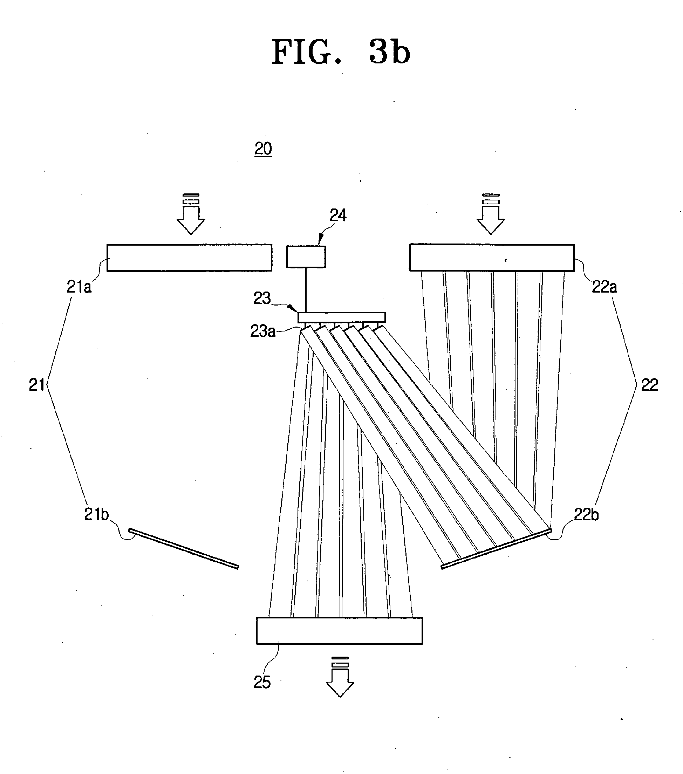

FIG. 2 is a perspective view of a three-dimensional image photography apparatus according to an exemplary embodiment of the present invention, and FIGS. 3A and 3B illustrate the adapter of FIG. 2.

Referring to FIGS. 2, 3A and 3B, a three-dimensional image photography apparatus according to an exemplary embodiment of the present invention includes an image photography unit 10, and an adapter 20.

The image photography unit 10 may include a general motion-picture camera, camcorder or still camera, and is configured in a single body. The image photography unit 10 may be movable, or stationed in an appropriate place such as a mount 11.

The adapter 20 alternately sends out right and left eye images to the image photography unit 10. The adaptor 20 may be removably mounted to the front side of the image photography unit 10. Alternatively, the adaptor 20 may be integrated with the image photography unit 10.

The adaptor 20 may include a first optical system 21, a second optical system 22, a DMD module 23, and a controller 24.

The first optical system 21 forms a path to input left eye image. The first optical system 21 may include a left eye input lens 21a arranged on the left front side of a casing 20a, and a left eye reflective mirror 21b which reflects the left eye image being incoming through the left eye input lens 21a toward the DMD module 23. The left eye input lens 21a is configured such that a left eye image passes through the left eye input lens 21a in perpendicular relation, and converged in a decreased size on the left eye reflective mirror 21b and minute driving mirrors 23a. For example, the left eye input lens 21a may have a planar outer side and a mirrors 23a according to a photograph frame signal of the image photography unit 10. For example, according to a n/sec photography frame, the controller 24 controls the rotational speed of the minute driving mirrors 23a such that the left eye images and right eye images are stored in n/2 frames, respectively. For the editing of the left eye images and the right eye images being alternately transmitted from the adaptor 20 and stored, the image photography unit 10 extracts left eye images and right eye images in every other frames and causes the extracted images on a display device (not shown).

As explained above, according to exemplary embodiments of the present invention, an economic image photography apparatus can be provided, which utilizes a single camera to construct a three-dimensional image.

Additionally, because left eye images and right eye images stored in the same camera are used to construct a three-dimensional image, additional processing such as editing of images for synchronization is not necessary.

A first aspect of the present invention provides a three-dimensional image photography apparatus as defined in claim 1; and an adaptor as defined in claim 14 which causes a left eye image and a right eye image to alternately enter the image photography unit.

The adaptor may comprise: a first optical system which forms a path to input the left eye image; a second optical system which forms a path to input the right eye image; and a digital micromirror device (DMD) module which comprises a plurality of minute driving mirrors which reflect the left eye image of the first optical system and the right eye image of the second optical system such that the left eye image and the right eye image are alternately entered into the image photography unit.

The first optical system may comprise: a left eye input lens; and a left eye reflective mirror which reflects the left eye image being transmitted through the left eye input lens such that left eye image is directed toward the minute driving mirrors.

The left eye reflective mirror may be arranged behind the left eye input lens.

The left eye reflective mirror may be inclined at a angle with respect to the left eye input lens and faced toward the DMD module.

The second optical system may comprise: a right eye input lens; and a right eye reflective mirror which reflects the right eye image being transmitted through the right eye input lens such that the right eye image is directed toward the minute driving mirrors.

The right eye reflective mirror may be arranged behind the right eye input lens.

The right eye reflective mirror may be inclined at a angle with respect to the right eye input lens and faced toward the DMD module.

The DMD module may be arranged between the first optical system and the second optical system. concave inner side. The left eye reflective mirror 21b may be arranged behind the left eye input lens 21a, and inclined at a predetermined angle with respect to the left eye input lens 21 a and faces the DMD module 23.

The second optical system 22 may form a path to input a right eye image. The second optical system 22 may include a right eye input lens 22a mounted to the right front side of the casing 20a, and a right eye reflective mirror 22b which reflects a right eye image being passed through the right eye input lens 22a such that the right eye image is directed toward the DMD module 23. The right eye input lens 22a is configured such that a right eye image passes therethrough in a perpendicular relation and converged in a decreased size on the right eye reflective mirror 22b and the minute driving mirrors 23a. For example, the right eye input lens 22a may have a planar outer side and a concave inner side. The right eye reflective mirror 22b may be arranged behind the right eye input lens 22a, and inclined at a predetermined angle with respect to the right eye input lens 22a and faces the DMD module 23.

The DMD module 23 may be arranged between the first and the second optical systems 21, 22. The DMD module 23 may include a plurality of minute driving mirrors 23a which alternately reflect the left and right eye images being reflected against the left eye reflective mirror 21b and the right eye reflective mirror 22b toward the image photography unit 10, and a plurality of electrodes (not shown) for rotatable movement of the minute driving mirrors 23a.

The controller 24 controls the rotation of the minute driving mirrors 23a. That is, the controller 24 may cause the minute driving mirrors 23a to rotate left and right according to a frame period signal such that left eye images being captured through the left eye reflective mirror 21b and right eye images being captured through the right eye reflective mirror 22b are alternately transmitted to the output lens 25. The output lens 25 may be arranged at the center of a rear side of the casing 20a, and preferably behind the DMD module 23. The output lens 25 is configured such that an image being transmitted from the DMD module 23 is magnified and passed therethrough in a perpendicular relation. For example, the output lens 25 may have, if desired, a planar outer side and a concave inner side. Accordingly, the output lens 25 magnifies the image being transmitted by the DMD module 23 and outputs the magnified image to the image photography unit 10.

The controller 24 may include a varying clock circuit (not shown), which varies the rotational speed of the minute driving mirrors 23a according to a variety of internally-set frame frequencies, instead of receiving an external frame signal, in the image photographing process of the image photography unit 10. Additionally, the controller 24 may additionally include a delay circuit (not shown), which delays an incoming frame signal to instruct the minute driving mirrors 23a to rotate in an accurate direction with respect to the left eye reflective mirror 21b and the right eye reflective mirror 22b at a time point that one frame is captured and at a time point that the following frame is captured.

In a three-dimensional image photography apparatus constructed as explained above, a left eye image being captured through the left eye input lens 21a is reflected against the left eye reflective mirror 21b and directed toward the DMD module 23, while the right eye image being captured through the right eye input lens 22a is reflected against the right eye reflective mirror 22b and directed toward the DMD module 23 (see FIGS. 3A, 3B). The DMD module 23 rotates the minute driving mirrors 23a left or right such that left eye images and right eye images being reflected against the left eye reflective mirror 21b and the right eye reflective mirror 22b are alternately re-reflected and directed toward the image photography unit 10 via the output lens 25. At this time, the controller 24 controls the rotation of the minute driving

## Claims

1. A three-dimensional image photography apparatus, comprising:
an image photography unit (10);
an adaptor (20) which causes a left eye image and a right eye image to alternately enter the image photography unit, wherein the adaptor (20) comprises:
a first optical system (21) which forms a path to input the left eye image;
a second optical system (22) which forms a path to input the right eye image; and
**characterised in that** the adaptor further comprises :
a digital micromirror device (DMD) module (23) which comprises a plurality of minute driving mirrors (23a) which reflect the left eye image of the first optical system and the right eye image of the second optical system such that the left eye image and the right eye image are alternately entered into the image photography unit (10).

2. The three-dimensional image photography apparatus of claim 1, wherein the first optical system (21) comprises:
a left eye input lens (21a); and
a left eye reflective mirror (21b) which reflects the left eye image being transmitted through the left eye input lens (21a) such that left eye image is directed toward the minute driving mirrors (23a).

3. The three-dimensional image photography apparatus of claim 2, wherein the left eye reflective mirror (21b) is arranged to face the left eye input lens (21a).

4. The three-dimensional image photography apparatus of claim 3, wherein the left eye reflective mirror (21b) is inclined at an angle with respect to the left eye input lens (21a) and faced toward the DMD module (23).

5. The three-dimensional image photography apparatus of any one of claims 1-4, wherein the second optical system (22) comprises:
a right eye input lens (22a); and
a right eye reflective mirror (22b) which reflects the right eye image being transmitted through the right eye input lens such that the right eye image is directed toward the minute driving mirrors (23a).

6. The three-dimensional image photography apparatus of claim 5, wherein the right eye reflective mirror (22b) is arranged to face the right eye input lens (22a).

7. The three-dimensional image photography apparatus of claim 6, wherein the right eye reflective mirror (22b) is inclined at an angle with respect to the right eye input lens (22a) and faced toward the DMD module (23).

8. The three-dimensional image photography apparatus of any one of claims 1-7, wherein the DMD module (23) is arranged between the first optical system (21) and the second optical system (22).

9. The three-dimensional image photography apparatus of any one of claims 1-8, wherein the adaptor (20) further comprises an output lens (25) which magnifies an image being transmitted by the DMD module (23) and outputs the magnified image to the image photography unit (10).

10. The three-dimensional image photography apparatus of claim 9, wherein the output lens (25) is arranged to face the DMD module (23).

11. The three-dimensional image photography apparatus of any one of claims 1-10, wherein the adaptor (20) further comprises a controller (24) which controls the rotation of the minute driving mirrors (23a).

12. The three-dimensional image photography apparatus of any preceding claim, wherein the adaptor (20) is removably mounted to a front side of the image photography unit (10).

13. The three-dimensional image photography apparatus of any preceding claim, wherein the adaptor (20) is integrally formed on a front side of the image photography unit (10).

14. An adaptor (20) comprising:
a first optical system (21) which forms a path to input a left eye image;
a second optical system (22) which forms a path to input a right eye image; and
**characterised in that**:
a digital micromirror device (DMD) module (23) comprises a plurality of minute driving mirrors (23a) which reflect the left eye image of the first optical system and the right eye image of the second optical system such that the left eye image and the right eye image are alternately entered into an image photography unit (10).

## Patentansprüche

1. Vorrichtung zur Photographie dreidimensionaler Bilder, umfassend:
eine Bildphotographieeinheit (10);
einen Adapter (20), der bewirkt, daß ein Linkes-Auge-Bild und ein Rechtes-Auge-Bild abwechselnd in die Bildphotographieeinheit eintreten, wobei der Adapter (20) folgendes umfaßt:
ein erstes optisches System (21), das einen Weg zum Eingeben des Linkes-Auge-Bilds bildet;
ein zweites optisches System (22), das einen Weg zum Eingeben des Rechtes-Auge-Bilds bildet; und
**dadurch gekennzeichnet, daß** der Adapter weiterhin folgendes umfaßt:
ein DMD-Modul (Digital Micromirror Device - digitale Mikrospiegeleinrichtung) (23), das mehrere kleine Ansteuerspiegel (23a) umfaßt, die das Linkes-Auge-Bild des ersten optischen Systems und das Rechtes-Auge-Bild des zweiten optischen Systems derart reflektieren, daß das Linkes-Auge-Bild und das Rechtes-Auge-Bild abwechselnd in die Bildphotographieeinheit (10) eingetragen werden.

2. Vorrichtung zur Photographie dreidimensionaler Bilder nach Anspruch 1, wobei das erste optische System (21) folgendes umfaßt:
eine Linkes-Auge-Eintrittslinse (21a); und
einen reflektierenden Linkes-Auge-Spiegel (21b), der das durch die Linkes-Auge-Eintrittslinse (21a) übertragene Linkes-Auge-Bild derart reflektiert, daß das Linkes-Auge-Bild zu den kleinen Ansteuerspiegeln (23a) gelenkt wird.

3. Vorrichtung zur Photographie dreidimensionaler Bilder nach Anspruch 2, wobei der reflektierende Linkes-Auge-Spiegel (21b) ausgelegt ist, der Linkes-Auge-Eintrittslinse (21a) zugewandt zu sein.

4. Vorrichtung zur Photographie dreidimensionaler Bilder nach Anspruch 3, wobei der reflektierende Linkes-Auge-Spiegel (21b) unter einem Winkel bezüglich der Linkes-Auge-Eintrittslinse (21a) geneigt und zu dem DMD-Modul (23) gewandt ist.

5. Vorrichtung zur Photographie dreidimensionaler Bilder nach einem der Ansprüche 1-4, wobei das zweite optische System (22) folgendes umfaßt:
eine Rechtes-Auge-Eintrittslinse (22a); und
einen reflektierenden Rechtes-Auge-Spiegel (22b), der das durch die Rechtes-Auge-Eintrittslinse (22a) übertragene Rechtes-Auge-Bild derart reflektiert, daß das Rechtes-Auge-Bild zu den kleinen Ansteuerspiegeln (23a) gelenkt wird.

6. Vorrichtung zur Photographie dreidimensionaler Bilder nach Anspruch 5, wobei der reflektierende Rechtes-Auge-Spiegel (22b) ausgelegt ist, der Rechtes-Auge-Eintrittslinse (22a) zugewandt zu sein.

7. Vorrichtung zur Photographie dreidimensionaler Bilder nach Anspruch 6, wobei der reflektierende Rechtes-Auge-Spiegel (22b) unter einem Winkel bezüglich der Rechtes-Auge-Eintrittslinse (22a) geneigt und zu dem DMD-Modul (23) gewandt ist.

8. Vorrichtung zur Photographie dreidimensionaler Bilder nach einem der Ansprüche 1-7, wobei das DMD-Modul (23) zwischen dem ersten optischen System (21) und dem zweiten optischen System (22) angeordnet ist.

9. Vorrichtung zur Photographie dreidimensionaler Bilder nach einem der Ansprüche 1-8, wobei der Adapter (20) weiterhin eine Austrittslinse (25) umfaßt, die ein von dem DMD-Modul (23) übertragenes Bild vergrößert und das vergrößerte Bild zu der Bildphotographieeinheit (10) ausgibt.

10. Vorrichtung zur Photographie dreidimensionaler Bilder nach Anspruch 9, wobei die Austrittslinse (25) so angeordnet ist, daß sie dem DMD-Modul (23) zugewandt ist.

11. Vorrichtung zur Photographie dreidimensionaler Bilder nach einem der Ansprüche 1-10, wobei der Adapter (20) weiterhin einen Kontroller (24) umfaßt, der die Drehung der kleinen Ansteuerspiegel (23a) steuert.

12. Vorrichtung zur Photographie dreidimensionaler Bilder nach einem vorhergehenden Anspruch, wobei der Adapter (20) entfernbar an einer Vorderseite der Bildphotographieeinheit (10) montiert ist.

13. Vorrichtung zur Photographie dreidimensionaler Bilder nach einem vorhergehenden Anspruch, wobei der Adapter (20) integral auf einer Vorderseite der Bildphotographieeinheit (10) ausgebildet ist.

14. Adapter (20), umfassend:
ein erstes optisches System (21), das einen Weg zum Eingeben eines Linkes-Auge-Bilds bildet;
ein zweites optisches System (22), das einen Weg zum Eingeben eines Rechtes-Auge-Bilds bildet; und
**dadurch gekennzeichnet, daß**:
ein DMD-Modul (Digital Micromirror Device - digitale Mikrospiegeleinrichtung) (23), das mehrere kleine Ansteuerspiegel (23a) umfaßt, die das Linkes-Auge-Bild des ersten optischen Systems und das Rechtes-Auge-Bild des zweiten optischen Systems derart reflektieren, daß das Linkes-Auge-Bild und das Rechtes-Auge-Bild abwechselnd in die Bildphotographieeinheit (10) eingetragen werden.

## Revendications

1. Appareil de photographie d'images tridimensionnelles, comprenant :
une unité de photographie d'images (10) ;
un adaptateur (20) qui fait pénétrer une image d'oeil gauche et une image d'oeil droit en alternance dans l'unité de photographie d'images, l'adaptateur (20) comprenant :
un premier système optique (21) formant un trajet d'entrée de l'image d'oeil gauche ;
un second système optique (22) formant un trajet d'entrée de l'image d'oeil droit ; et
l'appareil étant **caractérisé en ce que** l'adaptateur comprend en outre :
un module du type matrice de micro-miroirs numériques (DMD) (23) comprenant une pluralité de miroirs de direction minuscules (23a) réfléchissant l'image d'oeil gauche du premier système optique et l'image d'oeil droit du second système optique de façon à faire pénétrer l'image d'oeil gauche et l'image d'oeil droit en alternance dans l'unité de photographie d'images (10).

2. Appareil de photographie d'images tridimensionnelles selon la revendication 1, le premier système optique (21) comprenant :
une lentille d'entrée d'oeil gauche (21a) ; et
un miroir réfléchissant d'oeil gauche (21b) réfléchissant l'image d'oeil gauche transmise à travers la lentille d'entrée d'oeil gauche (21a) de façon à diriger l'image d'oeil gauche vers les miroirs de direction minuscules (23a).

3. Appareil de photographie d'images tridimensionnelles selon la revendication 2, le miroir réfléchissant d'oeil gauche (21b) étant agencé en regard de la lentille d'entrée d'oeil gauche (21a).

4. Appareil de photographie d'images tridimensionnelles selon la revendication 3, le miroir réfléchissant d'oeil gauche (21b) étant incliné d'un certain angle par rapport à la lentille d'entrée d'oeil gauche (21a) et agencé en regard du module DMD (23).

5. Appareil de photographie d'images tridimensionnelles selon l'une quelconque des revendications 1 à 4, le second système optique (22) comprenant :
une lentille d'entrée d'oeil droit (22a) ; et
un miroir réfléchissant d'oeil droit (22b) réfléchissant l'image d'oeil droit transmise à travers la lentille d'entrée d'oeil droit de façon à diriger l'image d'oeil droit vers les miroirs de direction minuscules (23a).

6. Appareil de photographie d'images tridimensionnelles selon la revendication 5, le miroir réfléchissant d'oeil droit (22b) étant agencé en regard de la lentille d'entrée d'oeil droit (22a).

7. Appareil de photographie d'images tridimensionnelles selon la revendication 6, le miroir réfléchissant d'oeil droit (22b) étant incliné d'un certain angle par rapport à la lentille d'entrée d'oeil droit (22a) et agencé en regard du module DMD (23).

8. Appareil de photographie d'images tridimensionnelles selon l'une quelconque des revendications 1 à 7, le module DMD (23) étant agencé entre le premier système optique (21) et le second système optique (22).

9. Appareil de photographie d'images tridimensionnelles selon l'une quelconque des revendications 1 à 8, l'adaptateur (20) comprenant en outre une lentille de sortie (25) qui grossit une image transmise par le module DMD (23) et fournit l'image grossie à l'unité de photographie d'images (10).

10. Appareil de photographie d'images tridimensionnelles selon la revendication 9, la lentille de sortie (25) étant agencée en regard du module DMD (23).

11. Appareil de photographie d'images tridimensionnelles selon l'une quelconque des revendications 1 à 10, l'adaptateur (20) comprenant en outre une unité de commande (24) commandant la rotation des miroirs de direction minuscules (23a).

12. Appareil de photographie d'images tridimensionnelles selon l'une quelconque des revendications précédentes, l'adaptateur (20) étant monté amovible sur une façade de l'unité de photographie d'images (10).

13. Appareil de photographie d'images tridimensionnelles selon l'une quelconque des revendications précédentes, l'adaptateur (20) étant formé d'un seul tenant avec une façade de l'unité de photographie d'images (10).

14. Adaptateur (20), comprenant :
un premier système optique (21) formant un trajet d'entrée d'une image d'oeil gauche ;
un second système optique (22) formant un trajet d'entrée d'une image d'oeil droit ; et
l'adaptateur étant **caractérisé en ce que** :
un module du type matrice de micro-miroirs numériques (DMD) (23) comprenant une pluralité de miroirs de direction minuscules (23a) réfléchissant l'image d'oeil gauche du premier système optique et l'image d'oeil droit du second système optique de façon à faire pénétrer l'image d'oeil gauche et l'image d'oeil droit en alternance dans une unité de photographie d'images (10).
